(19) Europäisches Patentamt
European Patent Office
Office européen des brevets

(11) Numéro de publication : **0 044 759**
**B1**

(12) # FASCICULE DE BREVET EUROPÉEN

(45) Date de publication du fascicule du brevet : **21.03.84**

(51) Int. Cl.$^3$ : **C 09 K 3/34**

(21) Numéro de dépôt : **81400959.3**

(22) Date de dépôt : **16.06.81**

(54) **Cristal liquide smectique de type A présentant une anisotropie diélectrique positive.**

(30) Priorité : **18.07.80 FR 8015904**

(43) Date de publication de la demande :
**27.01.82 Bulletin 82/04**

(45) Mention de la délivrance du brevet :
**21.03.84 Bulletin 84/12**

(84) Etats contractants désignés :
**CH DE GB IT LI NL**

(56) Documents cités :
**DE-A- 2 613 293**
**FR-A- 2 207 758**
**FR-A- 2 297 201**
**FR-A- 2 380 333**
**US-A- 3 951 846**
**US-A- 4 029 594**
**US-A- 4 120 567**
**CHEMICAL ABSTRACTS, vol. 91, no. 20, 1979, page 518, abrégé 115393b, COLUMBUS, OHIO (US)**

(73) Titulaire : **THOMSON-CSF**
**173, Boulevard Haussmann**
**F-75379 Paris Cedex 08 (FR)**

(72) Inventeur : **Zann, Annie**
**THOMSON-CSF SCPI 173, bld Haussmann**
**F-75360 Paris Cedex 08 (FR)**
Inventeur : **Dubois, Jean-Claude**
**THOMSON-CSF SCPI 173, bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

**EP 0 044 759 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Cristal liquide smectique de type A présentant une anisotropie diélectrique positive

L'invention concerne un cristal liquide dont la formule générale correspond à une famille de corps ne différant entre eux que par un groupement alkyl ou alkoxy et par un radical brome ou cyano. Ces corps présentent dans certaines gammes de température une mésophase smectique de type A à anisotropie diélectrique positive. Les mélanges de ces corps soit entre eux soit avec d'autres cristaux liquides sont inclus dans le cadre de l'invention. Ils sont utilisables dans des dispositifs de visualisation où l'on bénéficie de l'effet thermo-optique avec ou sans assistance par un champ électrique.

L'étude des cristaux liquides, entrepris depuis déjà un certain temps, a déterminé la découverte de toute une série de composés organiques ou de mélanges de ces composés présentant au moins une mésophase. Les dispositifs qui utilisent des cristaux liquides doivent répondre à certaines exigences : température d'utilisation de l'ordre de la température ambiante, faible puissance de fonctionnement associés à un bon contraste. Les derniers aspects de la technique conduisent à une large utilisation de cristaux liquides présentant une phase smectique. Parmi les produits utilisables, on peut citer ceux qui ont fait l'objet du brevet français publié sous le numéro 2 297 201 et déposé le 10 janvier 1975. Ce brevet revendique des composés du type alkyl (ou alkoxy) 4, benzoate de p-cyano (ou bromo) biphényle non substitués. Certains de ces composés présentent une phase smectique mais pour des températures relativement élevées (de 150 à 200 °C et plus). Le brevet américain portant le numéro 4 029 594 déposé le 14 juin 1977 reprend le même produit en introduisant certaines substitutions. Certains des composés obtenus par ce moyen présentent une phase smectique à des températures un peu plus basses mais encore trop élevées pour des applications du genre écran de visualisation.

Afin de pallier ces inconvénients, la présente invention propose des mélanges de cristaux liquides, les cristaux liquides de base étant du type cité plus haut et comportant une substitution d'un noyau phényle. L'invention a pour but d'obtenir des mélanges présentant une large gamme smectique A incluant l'ambiante, une gamme nématique étroite, un bon pouvoir diffusant et des températures de transition relativement basses ce qui permettra de les employer dans des dispositifs à faible puissance de fonctionnement.

L'invention a donc pour objet un mélange de cristaux liquides, ledit mélange présentant une phase smectique A à anisotropie diélectrique positive, au moins l'un desdits cristaux liquides étant un alkylcyano-biphényle, caractérisé en ce qu'il comprend également un cristal liquide répondant à la formule générale :

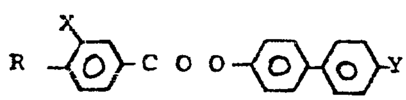

dans laquelle :

$R = C_n H_{2n+1}$ ou $C_n H_{2n+1} O$ avec : $1 \leq n \leq 15$
X = Br ou CN
Y = Br ou CN.

Les composés de base des mélanges sont désignés par les expressions :

1) (alkyl ou alkoxy)-4 bromo-3 benzoate de p-bromobiphényl, si X = Y = Br
2) (alkyl ou alkoxy)-4 bromo-3 benzoate de p-cyanobiphényl, si X = Br et Y = CN
3) (alkyl ou alkoxy)-4 cyano-3 benzoate de p-cyanobiphényl, si X = Y = CN.

On donne ci-après le mécanisme du procédé général de fabrication selon l'invention, puis on décrit ensuite quelques exemples de modes opératoires.

Procédé général de fabrication

On fait, dans un premier temps, la synthèse de l'hydroxy-4 bromo-4' biphényle et, selon le cas, de l'acide alkoxy-4 bromo-3 benzoïque ou alkyl-4 bromo-3 benzoïque pour obtenir les benzoates bromés. Pour obtenir les composés comportant CN, on substitue le nitrile au brome dans les composés bromés.

1. Synthèse de l'hydroxy-4 bromo-4' biphényle

La matière première est l'acétate de biphényle sur lequel on fait agir le brome à 30 °C en présence d'iode comme catalyseur. Le schéma de la réaction est le suivant :

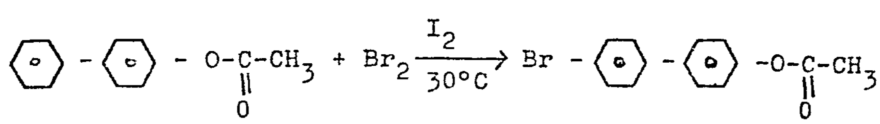

Le produit obtenu est saponifié par la potasse en milieu éthanolique puis hydrolisé par l'acide chlorhydrique selon le schéma suivant :

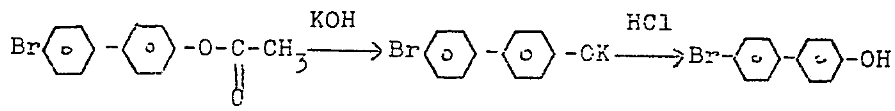


Dans le cas des produits X = Br et Y = CN, il est nécessaire de synthétiser l'hydroxy-4 cyano-4' biphényle. On l'obtient à partir du produit précédent en faisant agir du cyanure de cuivre dans le diméthylformamide :

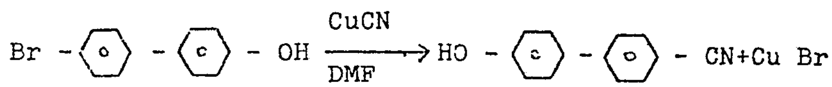


2. Synthèse de l'acide (alkyl ou alkoxy)-4 bromo-3 benzoïque

On l'obtient par bromation de l'acide benzoïque 4 substitué correspondant :

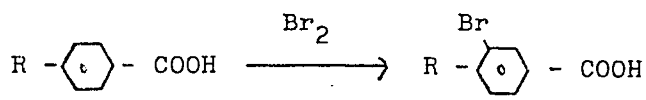


Pour R = $C_nH_{2n+1}$, la réaction s'effectue dans une solution aqueuse d'acide nitrique et acétique en présence de nitrate d'argent, à 25 °C.

Pour R = $C_nH_{2n+1}O$, la réaction s'effectue en milieu aqueux à 55 °C.

3. Synthèse du chlorure de l'acide précédent. Le schéma est le suivant :

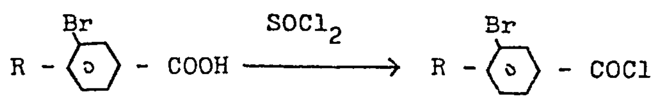


4. Synthèse des benzoates de biphényle. Trois cas sont à envisager :

1) Cas où X = Y = Br :

On effectue une estérification de l'hydroxy-4 bromo-4' biphényle avec le chlorure de l'acide 3-bromé choisi, à température ambiante, dans un milieu constitué par la pyridine :

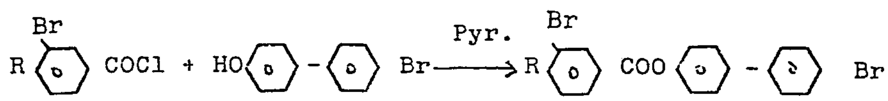


2) Cas où X = Br et Y = CN :

L'estérification est faite entre le chlorure d'acide et l'hydroxy-4 cyano-4' biphényle, dans le même milieu (pyridine)

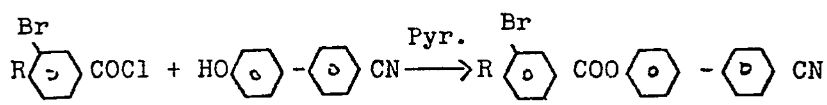


3) Cas où X = Y = CN :

On effectue une substitution des deux groupements Br par CN sur les produits du type (1) dans un milieu comportant du cyanure cuivreux et du diméthylformamide :

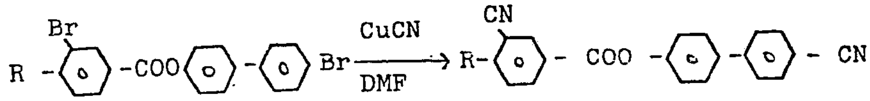

Exemples de modes opératoires ($R = C_7H_{15}$, X = Br, Y = CN)

a) Synthèse de l'acide n-heptyl-4 bromo-3 benzoïque :

Dans un mélange de 20 ml d'eau permutée, 27 ml d'acide nitrique et 120 ml d'acide acétique glacial porté à 25 °C, on ajoute 8,8 g (0,04 mole) d'acide n-heptyl-4 benzoïque et 8 g (0,05 mole) de brome sous agitation. On ajoute ensuite, en une demi-heure, une solution de 6,8 g (0,04 mole) de nitrate d'argent dans 20 ml d'eau permutée, en maintenant la température à 25 °C. On continue d'agiter pendant 3 h 30. La solution est ensuite versée dans 200 ml d'eau glacée et agitée pendant une 1/2 h. Le produit en suspension est filtré, lavé à l'eau permutée jusqu'à neutralité. L'acide est alors séparé du bromure d'argent formé par dissolution dans l'éthanol. La solution éthanolique est évaporée. On recueille 10,5 g de produit brut que l'on recristallise dans 30 cc d'hexane. 9,1 g de l'acide synthétisé sont récupérés. Le point de fusion observé est de 80 °C.

b) Synthèse de l'hydroxy-4 cyano-4' biphényle :

Dans un réacteur, on charge 1 mole ou 249 g d'hydroxy-4 bromo-4' biphényle, 1,25 mole ou 113 g de cyanure cuivreux et 1 l de diméthyl formamide. On porte à reflux, sous agitation, pendant 6 heures. La masse réactionnelle est ensuite versée dans un réacteur contenant de l'éthylène diamine et de l'eau. On extrait au chloroforme (2 fois 1 l) puis on lave la phase organique jusqu'à neutralité. Après séchage et évaporation du chloroforme, on obtient 100 g de produit brut. Après chromatographie sur silice avec du benzène comme éluant on obtient 47 g de produit. Le rendement de la synthèse est de l'ordre de 24 %.

c) Synthèse du n-heptyl-4 bromo-3 benzoate de cyano-4' biphényle :

0,5 g ($2,5 \cdot 10^{-3}$ mole) d'hydroxy-4 cyano-4' biphényle sont dissous dans 5 ml de pyridine. On y ajoute 0,8 g ($2,5 \cdot 10^{-3}$ mole) de chlorure d'heptyl-4 bromo-3 benzoyle. Le mélange est agité pendant 3 jours à température ambiante, puis versé dans un mélange de 20 g de glace 2 cc d'acide sulfurique concentré. Après 4 h d'agitation le produit est extrait au benzène, lavé à l'eau permutée jusqu'à neutralité et séché. Il est ensuite purifié par chromatographie sur colonne de silice en éluant au mélange hexane : benzène (50 : 50). Le produit obtenu est mis en solution dans l'éthanol et traité au noir végétal, puis recristallisé dans 15 cc d'éthanol. On recueille 300 mg de produit pur, soit un rendement de 25 %. Les caractéristiques du produit sont :

K 89,5 $S_A$ 129 N 151 I (températures en °C) avec les conventions suivantes :
K phase cristalline
$S_A$ phase smectique A
N phase nématique
I liquide isotrope

On a résumé dans le tableau I les formules et les gammes de températures de quelques exemples de corps selon l'invention.

Tableau I

| Exemple | Formule | Gammes de température et enthalpie de fusion |
|---|---|---|
| 1 | 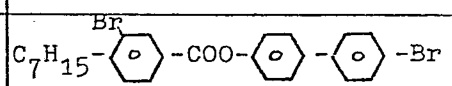 | K 90,5 $S_A$ 152,5 I (20,1) |
| 2 | 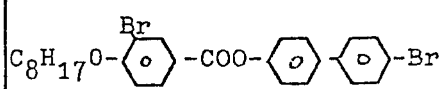 | K 121 $S_A$ 172 N 176 I |
| 3 | 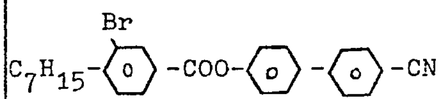 | K 89,5 $S_A$ 129 N 151 I (27,2) |
| 4 | 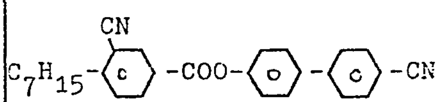 | K 131 [$S_A$] 94 [N] 117 I (37,7) |
| 5 | 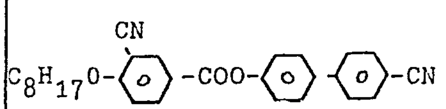 | K 152 [N] 152 I |

Les températures de transition entre les phases sont en degrés Celsius.

Les phases entre crochets sont du type métastable.

Les enthapies de fusion, portées entre parenthèses, sont en kJ/mole.

Les propriétés diélectriques des corps des exemples 1 et 3 ont été déterminées à partir des mesures effectuées sur un mélange de chacun des produits avec un cristal liquide nématique « F », le p-méthoxybenzoate de p-pentyl phénol. « F » est nématique de 29 à 43 °C. La composition du mélange est de 90 % de « F » et 10 % du composé selon l'invention, en fractions molaires. Le mélange est lui-même nématique. Les mesures sont faites à 22 °C ; le champ magnétique d'orientation est de $10^4$ oersteds (126 A/m) la fréquence du champ électrique de mesure est 10 kHz. Les corps des exemples 1 et 3 étant désignés par les lettres A et C, on a le tableau suivant de résultats :

Tableau II

| Cas de : | $\varepsilon_{//}$ | $\varepsilon_{\perp}$ | $\varepsilon_a$ |
|---|---|---|---|
| F pur | 5,7 | 5,6 | + 0,1 |
| Mélange A + F | 5,1 | 4,8 | + 0,3 |
| Mélange C + F | 6,8 | 5,1 | + 1,7 |

Les produits purs A et C ont donc une anisotropie diélectrique positive. En se basant sur une loi linéaire de variation $\varepsilon_a$ en fonction de la concentration, on déduit les valeurs suivantes : $\varepsilon_a$ (A) = 2, $\varepsilon_a$ (C) = 16. A est donc faiblement positif, C fortement positif.

Des mélanges eutectiques des composés selon l'invention avec d'autres cristaux liquides smectiques A sont utilisables notamment avec des para-cyanobiphényles de formule générale :

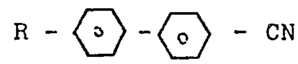

présentant tous la phase smectique A.

Le tableau suivant donne des exemples de mélanges

Tableau III

| Formules des composants et gamme de température | Fraction molaire de chaque composant |
|---|---|
| 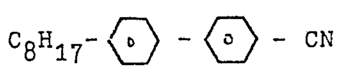 | 0,82 |
| et 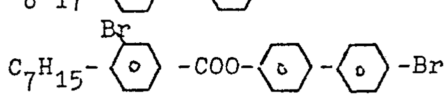 | 0,18 |
| Gamme : K 15,5 $S_A$ 53 N 57,5 I | |
| 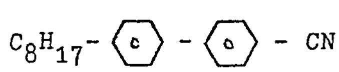 | 0,89 |
| et 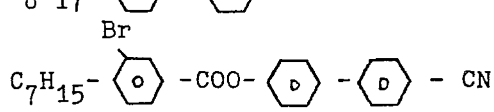 | 0,11 |
| Gamme : K 18 $S_A$ 44 N 53 I | |

| Formules des composants et gamme de température | Fraction molaire de chaque composant |
|---|---|
| 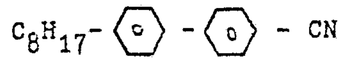 | 0,64 |
| 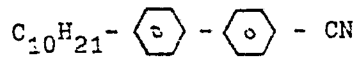 | 0,22 |
| et 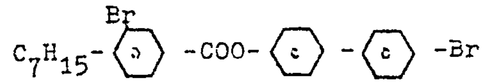 | 0,15 |
| Gamme : K 9,0 $S_A$ 54 N 57 I | |
| 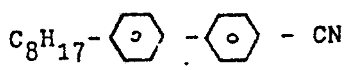 | 0,54 |
| 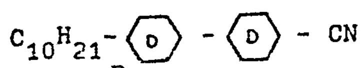 | 0,18 |
| 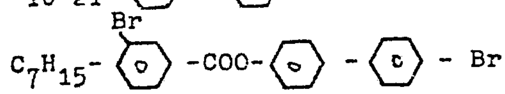 | 0,13 |
| et 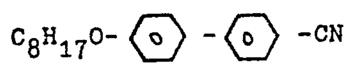 | 0,15 |
| Gamme : K 5 $S_A$ 57 N 63 I | |
| 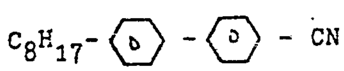 | 0,58 |
| 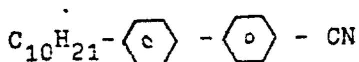 | 0,19 |
| 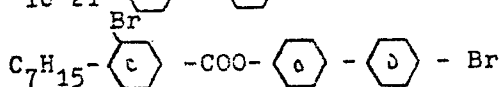 | 0,14 |
| et 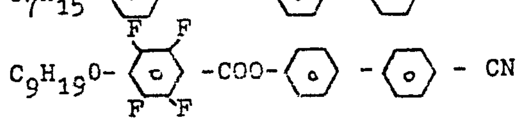 | 0,09 |
| Gamme : K 7 $S_A$ 63 N 69 I | |

Ces mélanges sont directement utilisables dans des dispositifs à effet thermo-optique tels que l'écran matriciel ou l'écran à adressage laser. Ils présentent toutes les caractéristiques requises : large gamme smectique A incluant l'ambiante, gamme nématique étroite, anisotropie diélectrique positive, bon pouvoir diffusant d'où bon contraste, et faible puissance de fonctionnement.

## Revendications

1. Mélange de cristaux liquides, ledit mélange présentant une phase smectique A à anisotropie diélectrique positive, au moins l'un desdits cristaux liquides étant un alkylcyano-biphényle, caractérisé en ce qu'il comprend également un cristal liquide répondant à la formule générale :

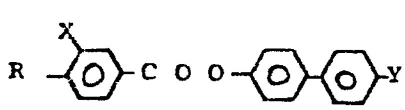

dans laquelle :

$R = C_nH_{2n+1}$ ou $C_nH_{2n+1}O$ avec : $1 \leqslant n \leqslant 15$

X = Br ou CN

Y = Br ou CN.

2. Mélange selon la revendication 1, caractérisé en ce qu'il comprend les cristaux liquides suivants :

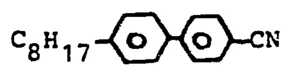

pour une proportion en moles dans le mélange de 0,82 ;

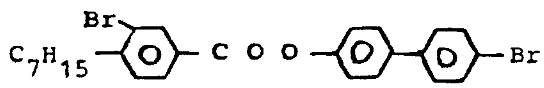

pour une proportion en moles de 0,18.

3. Mélange selon la revendication 1, caractérisé en ce qu'il comprend les cristaux liquides suivants :

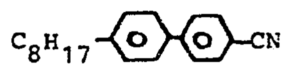

pour une proportion en moles dans le mélange de 0,89 ;

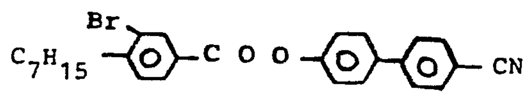

pour une proportion en moles de 0,11.

4. Mélange selon la revendication 1, caractérisé en ce qu'il comprend les cristaux liquides suivants :

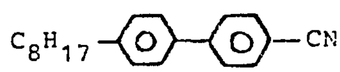

pour une proportion en moles dans le mélange de 0,64 ;

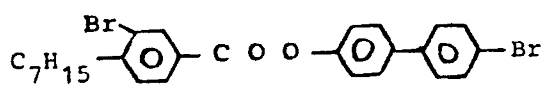

pour une proportion en moles de 0,15 ;

le mélange étant complété par un troisième cristal liquide de formule :

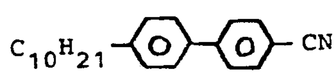

5. Mélange selon la revendication 1, caractérisé en ce qu'il comprend les cristaux liquides suivants :

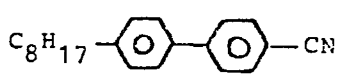

pour une proportion en moles dans le mélange de 0,54 ;

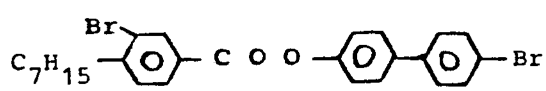

pour une proportion en moles de 0,13 ;

le mélange étant complété par les cristaux liquides suivants :

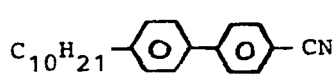

pour une proportion en moles de 0,18 ;

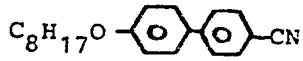

pour une proportion en moles de 0,15.

6. Mélange selon la revendication 1, caractérisé en ce qu'il comprend les cristaux liquides suivants :

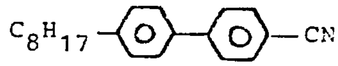

pour une proportion en moles dans le mélange de 0,58 ;

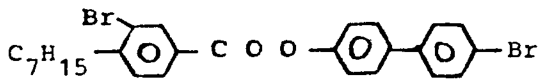

pour une proportion en moles de 0,14 ;

le mélange étant complété par les composés suivants :

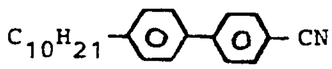

pour une proportion en moles de 0,19 ;

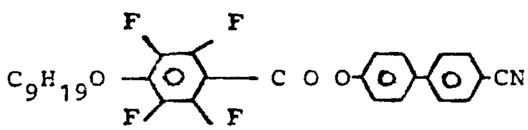

pour une proportion en moles de 0,09.

**Claims**

1. Mixture of liquid crystals with said mixture presenting a smectic phase A having positive dielectric anisotropy, at least one of said liquid crystals being an alkylcyano biphenyl, characterized in that it also comprises a liquid crystal corresponding to the general formula :

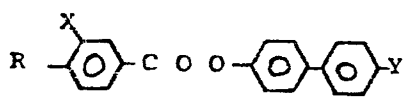

wherein

$R = C_nH_{2n+1}$ or $C_nH_{2n+1}O$ with $1 \leqslant n \leqslant 15$ ;
X = Br or CN ;
Y = Br or CN.

2. Mixture according to claim 1, characterized in that it contains the following liquid crystals

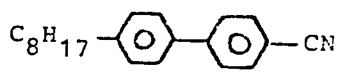

at a molar proportion in the mixture of 0.82 ;

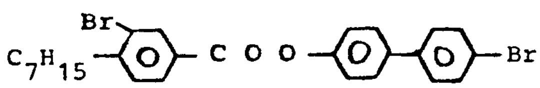

at a molar proportion of 0.18.

3. Mixture according to claim 1, characterized in that it contains the following liquid crystals :

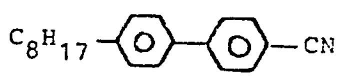

at a molar proportion in the mixture of 0.89.

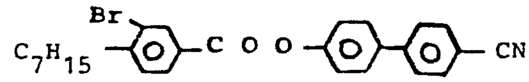

at a molar proportion of 0.11.

4. Mixture according to claim 1, characterized in that it contains the following liquid crystals :

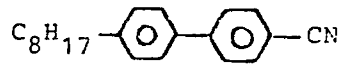

at a molar proportion in the mixture of 0.64 ;

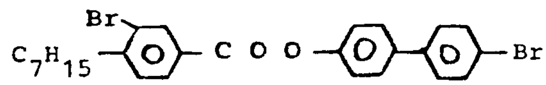

at a molar proportion of 0.15 ;

with the mixture being completed by a third liquid crystal of the formula

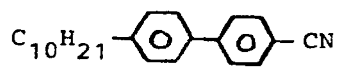

5. Mixture according to claim 1, characterized in that it contains the following liquid crystals

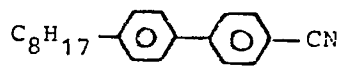

at a molar proportion in the mixture of 0.54

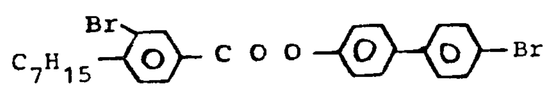

at a molar proportion of 0.13 ;

with the mixture being completed by the following liquid crystals :

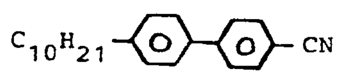

at a molar proportion of 0.18 ;

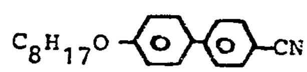

at a molar proportion of 0.15.

6. Mixture according to claim 1, characterized in that it contains the following liquid crystals :

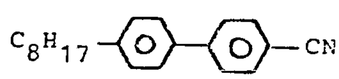

at a molar proportion in the mixture of 0.58 ;

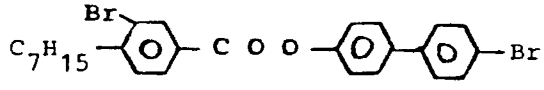

at a molar proportion of 0.14 ;

with the mixture being completed by the following compounds :

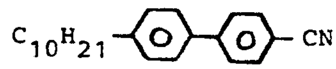

at a molar proportion of 0.19 ;

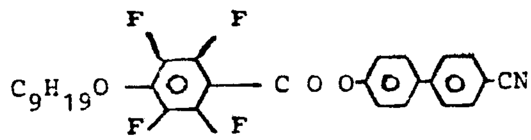

at a molar proportion of 0.09.

**Ansprüche**

1. Flüssigkristallgemisch mit einer smektischen Phase A mit positiver dielektrischer Anisotropie, wobei mindestens einer der Flüssigkristalle ein Alkylcyano-diphenyl ist, dadurch gekennzeichnet, daß es außerdem einen Flüssigkristall der allgemeinen Formel

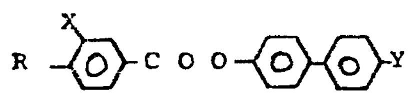

enthält, worin :
R = $C_nH_{2n+1}$ oder $C_nH_{2n+1}O$ mit $1 \leqslant n \leqslant 15$ ;
X = Br oder CN ;
Y = Br oder CN.

2. Gemisch nach Anspruch 1, dadurch gekennzeichnet, daß es die folgenden Flüssigkristalle enthält :

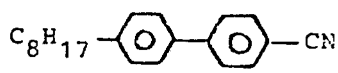

und zwar zu einem molaren Anteil in dem Gemisch von 0,82 ;

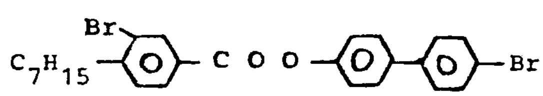

zu einem molaren Anteil von 0,18.

3. Gemisch nach Anspruch 1, dadurch gekennzeichnet, daß es die folgenden Flüssigkristalle enthält :

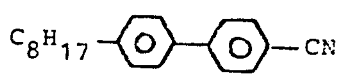

zu einem molaren Anteil in dem Gemisch von 0,89 ;

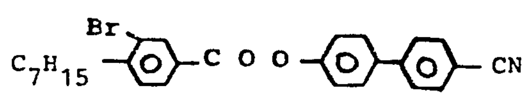

zu einem molaren Anteil von 0,11.

4. Gemisch nach Anspruch 1, dadurch gekennzeichnet, daß es die folgenden Flüssigkristalle enthält :

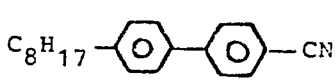

zu einem molaren Anteil in dem Gemisch von 0,64 ;

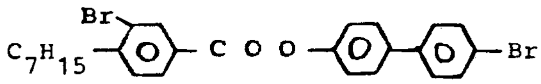

zu einem molaren Anteil von 0,15 ;

wobei das Gemisch durch einen dritten Flüssigkristall der Formel

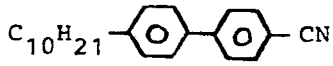

vervollständigt wird.

5. Gemisch nach Anspruch 1, dadurch gekennzeichnet, daß es die folgenden Flüssigkristalle enthält :

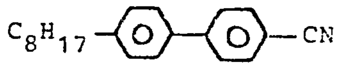

zu einem molaren Anteil in dem Gemisch von 0,54 ;

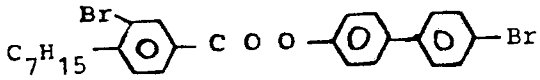

zu einem molaren Anteil von 0,13 ;

wobei das Gemisch durch die folgenden Flüssigkristalle vervollständigt wird :

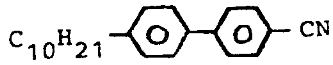

zu einem molaren Anteil von 0,18 ;

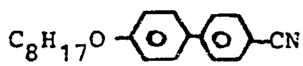

zu einem molaren Anteil von 0,15.

6. Gemisch nach Anspruch 1, dadurch gekennzeichnet, daß es die folgenden Flüssigkristalle umfaßt :

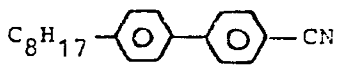

zu einem molaren Anteil in dem Gemisch von 0,58 ;

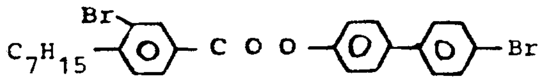

zu einem molaren Anteil von 0,14 ;

wobei das Gemisch durch die folgenden Verbindungen vervollständigt wird :

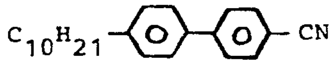

zu einem molaren Anteil von 0,19 ;

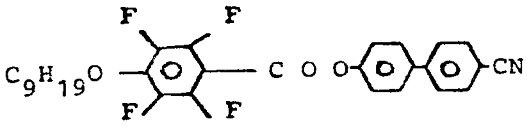

zu einem molaren Anteil von 0,09.